# EUROPEAN PATENT SPECIFICATION

(11) **EP 3 064 450 B1**
(45) Date of publication and mention of the grant of the patent: **18.09.2019**
(21) Application number: 14858683.7
(22) Date of filing: 21.10.2014
(51) Int. Cl.: B29D 22/00, B29C 70/08, B29L 31/00, B64D 11/02

(54) **AIRCRAFT WATER TANK**
FLUGZEUGWASSERTANK
RÉSERVOIR D'EAU D'AÉRONEF

(30) Priority: 30.10.2013 JP 2013224978
(43) Date of publication of application: 07.09.2016
(73) Proprietor: The Yokohama Rubber Co., Ltd., Minato-ku Tokyo 105-8685 (JP)
(72) Inventor: MASUDA, Mitsutaka, Hiratsuka-shi Kanagawa 254-8601 (JP)
(74) Representative: Dilg, Haeusler, Schindelmann Patentanwaltsgesellschaft mbH
(86) International application number: PCT/JP2014/077971
(87) International publication number: WO 2015/064424

(56) References cited:
- EP-A1- 2 495 171
- EP-A2- 2 322 841
- JP-A- H11 101 397
- JP-A- 2005 113 971
- JP-A- 2010 077 995
- JP-A- 2011 245 796
- JP-A- 2011 251 736
- JP-A- 2013 002 492

## Description

### Technical Field

The present invention relates to an aircraft water tank.

### Background Art

An aircraft water tank provided with a tank body comprising a cylindrical section and dome sections provided on both sides of the cylindrical section, and mouthpieces provided in the centers of the dome sections, has previously been proposed.
The tank body is constituted by an inner liner in which is formed an interior space for holding water, and a fiber-reinforced resin layer covering an outer peripheral surface of the inner liner.
Coaxial first and second openings in the inner liner and the fiber-reinforced resin layer are provided in the centers of the dome sections, and the mouthpieces are passed through the first and second openings and attached to the inner liner and the fiber-reinforced resin layer, and communicate with the interior space (see Patent Document 1).

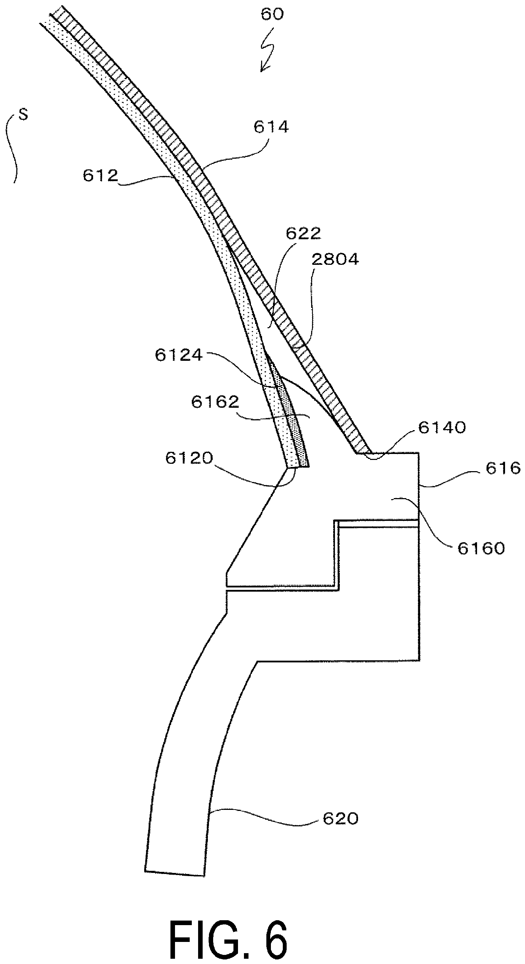

FIG. 6 is a cross-sectional view illustrating the structure in the vicinity of a mouthpiece 616 of an aircraft water tank 60 according to the conventional art. An outer peripheral surface of an inner liner 612 in which is formed an interior space S for holding water is covered by a fiber-reinforced resin layer 614. A first opening 6120 is formed in the inner liner 612 and a second opening 6140 in the fiber-reinforced resin layer 614 are coaxially provided in the center of a dome section.
The mouthpiece 616 comprises a cylindrical mouthpiece body 6160 that passes through the first and second openings 6120, 6140, and an annular wall section 6162 that protrudes from the outer periphery of the mouthpiece body 6160 and extends outward in the radial direction between the portion of the inner liner 612 surrounding the first opening 6120 and the portion of the fiber-reinforced resin layer 614 surrounding the second opening 6140, and to which those respective sections of the inner liner 612 and the fiber-reinforced resin layer 614 are attached. The interior space S is closed off by fitting a cap 620 into an opening formed in the inner periphery of the mouthpiece body 6160.

A reinforcing member (doubler) 6124 constituted by multiple layers of glass fibers is provided between the portion of the inner liner 612 surrounding the first opening 6120 and the annular wall section 6162. The reinforcing member 6124 is provided in order to protect the inner liner 612 from stress sustained from around the outer circumferential end of the annular wall section 6162.
Of the portion of the inner liner 612 surrounding the first opening 6120, that portion located to the outside than the radius of the annular wall section 6162 is filled with a filler 622. The filler 622 serves to fill in the gap formed around the openings (first and second opening 6120, 6140) in the aircraft water tank 60, which takes on a dome shape when the fiber-reinforced resin layer 614 is wound around the inner liner 612.

### Citation List

### Patent Literature

Patent Document 1, Japanese Unexamined Patent Application Publication No. 2011-251736A, discloses an aircraft water tank according to the preamble of claim 1.

### Summary of Invention

### Technical Problem

In the aircraft water take 60 according to the conventional art, as discussed above, it is necessary to provide a plurality of reinforcing members (reinforcing member 6124, fillers 622) around the openings in order to protect the inner liner 612 from stress sustained from around the outer circumferential end of the annular wall section 6162 and to fill in the gap formed around the openings (first and second openings 6120, 6140) when the fiber-reinforced resin layer 614 is wound around the inner liner 612. This increases the number of parts making up the aircraft water tank, leading to a problematic increase in the manufacturing cost of the aircraft water tank. The aircraft water tank according to the conventional art also presents the problem that the manufacturing process is complicated by the process of adding the reinforcing members.

The present invention was conceived in view of these circumstances, and has an object of providing an aircraft water tank having a simplified configuration.

### Solution to Problem

In order to achieve the object proposed above, an aircraft water tank according to the present invention is an aircraft water tank having the features of claim 1. The aircraft water tank is provided with a cylindrical section, dome sections provided on both sides of the cylindrical section, and a mouthpiece provided in a center of each of the dome sections; the dome sections being provided with an inner liner and a fiber-reinforced resin layer provided on an outer peripheral surface of the inner liner; the inner liner and the fiber-reinforced resin layer being provided with coaxially positioned openings; each of the mouthpieces being provided with a cylindrical mouthpiece body that passes through the openings, and an annular wall section that extends outward in a radial direction from around the entire outer circumference of the mouthpiece body between the inner liner and the fiber-reinforced resin layer, and is attached to the inner liner and the fiber-reinforced resin layer around the circumferences of the openings; and the annular wall sections having a surface shape on a side contacting the fiber-reinforced resin layer that is formed by a uniform tension curved surface.

### Advantageous Effects of Invention

In accordance with the present invention, the surface shape of the annular wall sections of the mouthpieces contacting the fiber-reinforced resin layer conforms to a uniform tension curved surface, thereby allowing the dome sections to be imparted with uniform tension curved surface shapes by directly winding the fiber-reinforced resin layer around these surfaces. As a result, no gaps are formed around the openings, eliminating the need for the filler filling the space between the inner liner and the fiber-reinforced resin layer in conventional tanks.

In addition, the surface shape of the annular wall sections has less curvature than in mouthpieces according to the conventional art, and the thickness of the outer circumferential ends of the mouthpieces is reduced. For this reason, the elasticity of the outer circumferential ends of the mouthpieces is improved, and stress near the outer circumferential ends can be widely dispersed, thereby eliminating the need for the conventional reinforcing member (doubler).

As a result, the number of parts making up the aircraft water tank is reduced, which is advantageous for reducing costs. It is also possible to reduce the number of steps used to manufacture the aircraft water tank, allowing for improved production efficiency.

### Brief Description of Drawings

- FIG. 1: is an external perspective view of an aircraft water tank according to an embodiment of the present invention.
- FIG. 2: is a cross-sectional view along line A-A' of configuration of an aircraft water tank according to a first embodiment, not being part of the present invention.
- FIG. 3: is a cross-sectional view of the main parts of the aircraft water tank according to the first embodiment.
- FIG. 4: is a cross-sectional view of the main parts of an aircraft water tank according to a second embodiment, being part of the present invention.

- FIG. 5: is an illustration of a method for manufacturing an inner liner of the second embodiment.
- FIG. 6: is a cross-sectional view of the structure near an opening in an aircraft water tank according to the conventional art.

### Description of Embodiments

### (First embodiment)

Next, embodiments will be described with reference to the drawings.

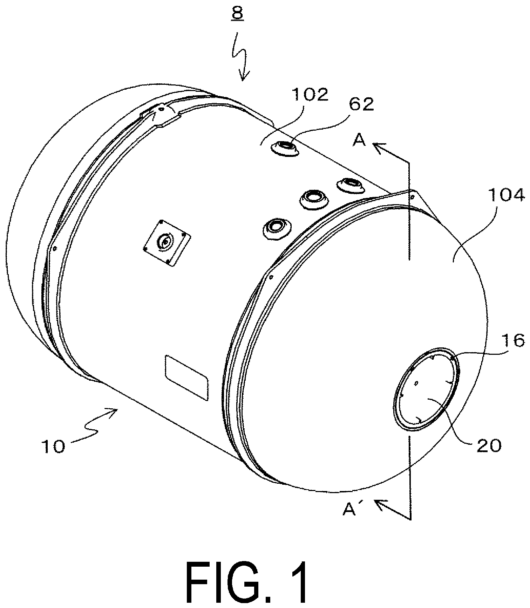

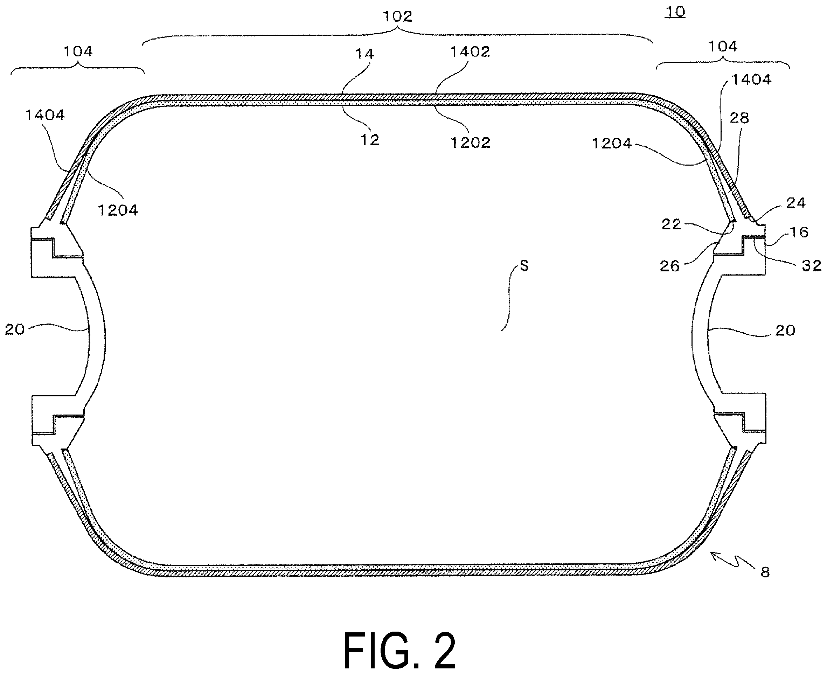

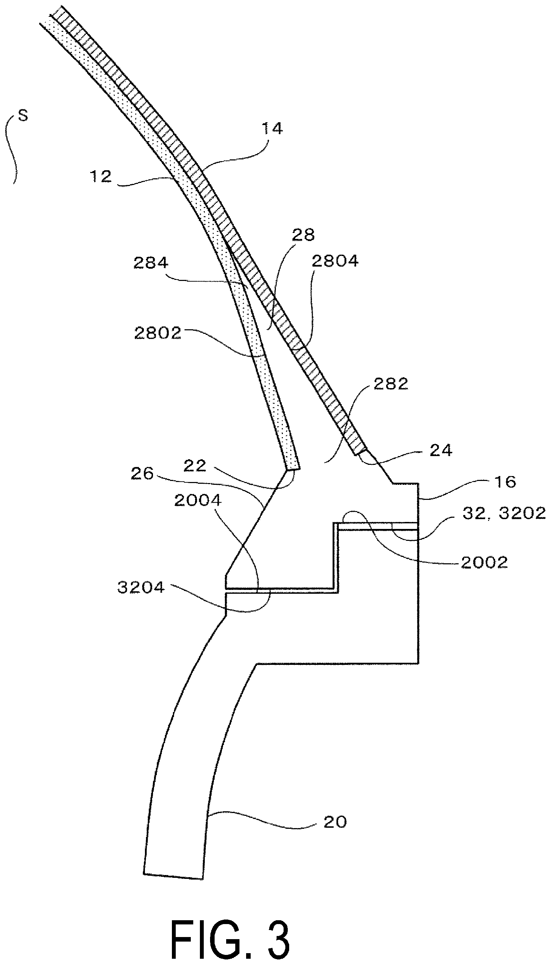

FIG. 1 is an external perspective view of an aircraft water tank according to an embodiment, FIG. 2 is a cross-sectional view along line A-A' of the configuration of the aircraft water tank, and FIG. 3 is a cross-sectional view of the main parts of the aircraft water tank.

An aircraft water tank 8 is installed in an aircraft and serves to hold drinking water. As illustrated in FIG. 1, the aircraft water tank 8 is installed at a suitable location within the aircraft so that the lengthwise direction of the aircraft water tank 8 is horizontally disposed with two mouthpieces 16 being sealed by removable caps 20.

Water supply tank ports (water supply openings) 62 that communicate with the interior space S and are used to fill the tank with water or air or empty the tank of the same are provided at upward-facing locations at intermediate positions along the lengthwise direction of the aircraft water tank 8. A water supply tank port (not illustrated) that communicates with the interior space S is provided at down-facing location at intermediate positions along the lengthwise direction of the aircraft water tank 8.

If the aircraft water tank 8 is used to hold drinking water, the water supply tank ports 62 are connected to an external water supply source, and water from the water supply source is supplied to the interior space S through the water supply tank ports 62.

Once the interior space S is filled with drinking water, the water supply tank ports 62 are disconnected from the water supply source, and the water supply tank ports are connected to water supply pipes communicating with spouts installed within the aircraft.

To supply drinking water from the aircraft water tank 8 to spouts or the like within the aircraft, air is supplied from an air supply source installed within the aircraft to the interior space S through the water supply tank ports 62, thereby placing pressure upon the drinking water within the aircraft water tank 8, and supplying the drinking water to the spouts via the water supply tank ports and the water supply pipes.

As illustrated in FIG. 2 and FIG. 3, the aircraft water tank 8 is provided with a tank body 10 and mouthpieces 16. The tank body 10 comprises a cylindrical section 102, and dome sections 104 provided on both sides of the cylindrical section 102, the mouthpieces 16 being provided in the centers of the dome sections 104. The mouthpieces 16 constitute cleaning openings for cleaning the interior of the aircraft water tank 8. The cylindrical section 102 and the dome sections 104 are provided with an inner liner 12 and a fiber-reinforced resin layer 14 provided on an outer peripheral surface of the inner liner 12. Coaxially positioned openings (first opening 22, second opening 24) for the mouthpieces 16 are provided in the inner liner 12 and the fiber-reinforced resin layer 14 in the centers of the dome sections 104.

More specifically, the cylindrical section 102 and the dome sections 104 are integrally formed in the inner liner 12, and form an interior space S for holding a liquid (drinking water). Coaxial first openings 22 are provided in the two lengthwise-directional ends of the inner liner 12 forming the centers of the dome sections 104. Designating that portion of the inner liner 12 that forms the cylindrical section 102 as body section 1202 and those portions of the inner liner 12 that form the dome sections 104 as dome sections 1204, the first openings 22 are formed in the centers of the dome sections 1204.

The inner liner 12 is formed, for example, from a polyolefin. The inner liner 12 may also be formed from various other conventionally known synthetic resins, such as acrylonitrile butadiene styrene (ABS) resin or polyethylene terephthalate (PET) resin.

The fiber-reinforced resin layer 14 comprises second openings 24 positioned coaxially with the first openings 22, and covers the outer peripheral surface of the inner liner 12. Designating that portion of the fiber-reinforced resin layer 14 that forms the cylindrical section 102 and is laid over the body section 1202 of the inner liner 12 as body section 1402 and those portions of the fiber-reinforced resin layer 14 that form the dome sections 104 and are laid over the dome sections 1204 of the inner liner 12 as dome sections 1404, the second openings 24 are formed in the centers of the dome sections 1404.
The fiber-reinforced resin layer 14 is formed via a filament winding method in which reinforcing fibers (filaments) impregnated with a thermosetting resin are wound around the outer peripheral surface of the inner liner 12, after which the thermosetting resin is thermally cured.
Various conventionally known synthetic resins such as epoxy resin can be used as the thermosetting resin. Various conventionally known fibers such as carbon fibers or glass fibers can be used as the reinforcing fibers.

The mouthpieces 16 are provided with caps 20 that are capable of engaging with and detaching from the mouthpieces 16. As illustrated in FIG. 3, the mouthpieces 16 comprise cylindrical mouthpiece bodies 26 and annular wall sections 28 that extend outward in the radial direction around the entire outer circumferences of the mouthpiece bodies 26.
The mouthpiece bodies 26 pass through the first and second openings 22, 24, and the interior circumferences thereof communicate with the interior space S.
In the present embodiment, the mouthpieces 16 are formed, for example, from a synthetic resin of superior chemical resistance. Various known synthetic resins, such as glass-fiber-containing polyphenylsulfone resin, can be used for this synthetic resin.
Mouthpiece side openings 32 are provided in the interior circumferences of the mouthpiece bodies 26.
The mouthpiece side openings 32 comprise larger-diameter hole sections 3202 into which the caps 20 are fitted and smaller-diameter hole sections 3204 continuous with the larger-diameter hole sections 3202.

The annular wall sections 28 are disposed between the inner liner 12 and the fiber-reinforced resin layer 14.
More specifically, the annular wall sections 28 extend outward in the radial direction of the first and second openings 22, 24 between those portions of the inner liner 12 that surround the first openings 22 and those portions of the fiber-reinforced resin layer 14 that surround the second openings 24. One side of each of the annular wall sections 28 with respect to the through-thickness direction is designated as an inner surface 2802 that faces the interior of the aircraft water tank 8, and the other side is designated as an outer surface 2804 that faces the exterior of the aircraft water tank 8.
The entireties of the inner surfaces 2802 of the annular wall sections 28 are attached to those portions of the inner liner 12 that surround the first openings 22.
The entireties of the outer surfaces 2804 of the annular wall sections 28 are attached to those portions of the fiber-reinforced resin layer 14 that surround the second openings 24.
The thickness of the annular wall sections 28 decreases from base sections 282 by the mouthpiece bodies 26 toward outer circumferential ends 284.

The shape of the surfaces of the annular wall sections 28 on the sides thereof contacting the fiber-reinforced resin layer 14, i.e., the outer surfaces 2804, are formed by uniform tension curved surfaces. The shapes of the dome sections 104 of the aircraft water tank 8 are formed by uniform tension curved surfaces in which stress caused by internal pressure is uniformly distributed throughout the fiber-reinforced resin layer 14 over the dome sections 104. The outer surfaces 2804 of the annular wall sections 28 contacting the fiber-reinforced resin layer 14 conform to the uniform tension curved surfaces, and the outer peripheral surface of the fiber-reinforced resin layer 14, i.e., the shapes of the dome sections 104 of the aircraft water tank 8, are imparted with the shape of the uniform tension curved surfaces by winding the fiber-reinforced resin layer 14 over the outer surfaces 2804.

As illustrated in FIG. 3, the caps 20 are fitted into the mouthpiece side openings 32 to seal off the interior space S.
The caps 20 are provided with larger-diameter sections 2002 that releasably join to the larger-diameter hole sections 3202, and smaller-diameter sections 2004 that are fitted into the smaller-diameter hole sections 3204.

Next, the functions and effects of the aircraft water tank 8 will be described.
The surfaces of the annular wall sections of mouthpieces in a tank according to the conventional art have shapes exhibiting greater curvature than a uniform tension curved surface, and have shorter radii from the centers of the mouthpieces 16 than that of the mouthpieces 16 of the present embodiment (see FIG. 6). For this reason, when the fiber-reinforced resin layer 14 in the dome sections 104 is wound along the uniform tension curved surfaces, gaps are formed between the fiber-reinforced resin layer 14 and the inner liner 12, creating a need to fill these gaps with a filler (see FIG. 6).
In the present embodiment, by contrast, the surface shapes of the annular wall sections 28 of the mouthpieces 16 conform to uniform tension curved surfaces, thereby allowing the dome sections 104 to be imparted with uniform tension curved surface shapes by directly winding the fiber-reinforced resin layer 14 around these surfaces. This eliminates the need for a filler around the openings 16 of the aircraft water tank 8 according to the present embodiment.

In addition, the surface shape of the annular wall sections 28 of the mouthpieces 16 of the present embodiment has less curvature than in mouthpieces according to the conventional art, and the radii from the centers of the mouthpieces 16 are longer. For this reason, the outer circumferential ends 284 of the mouthpieces 16 of the present embodiment are thinner than in mouthpieces according to the conventional art when the base sections 282 contacting the mouthpiece bodies 26 are of identical thickness. For this reason, the elasticity of the outer circumferential ends 284 is improved, and stress near the outer circumferential ends 284 can be widely dispersed, thereby eliminating the need for the conventional reinforcing member (doubler; see FIG. 6).
Thus, there is likewise no need for a reinforcing member between the outer circumferences of the mouthpieces 16 and the inner liner 12 in the present embodiment.
As a result, the number of parts making up the aircraft water tank 8 is reduced in the present embodiment, which is advantageous for reducing costs. It is also possible to reduce the number of steps used to manufacture the aircraft water tank 8, allowing for improved production efficiency.

### (Second embodiment according to the invention)

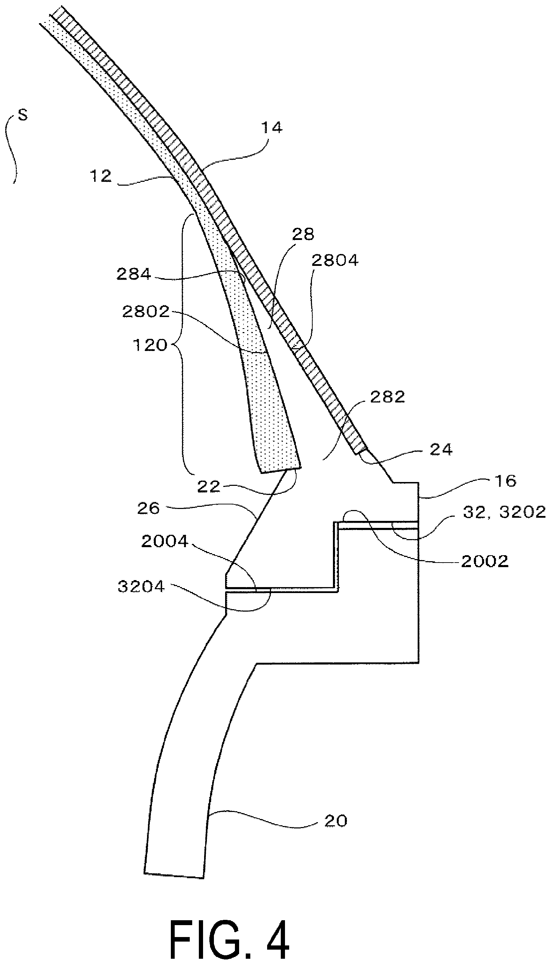

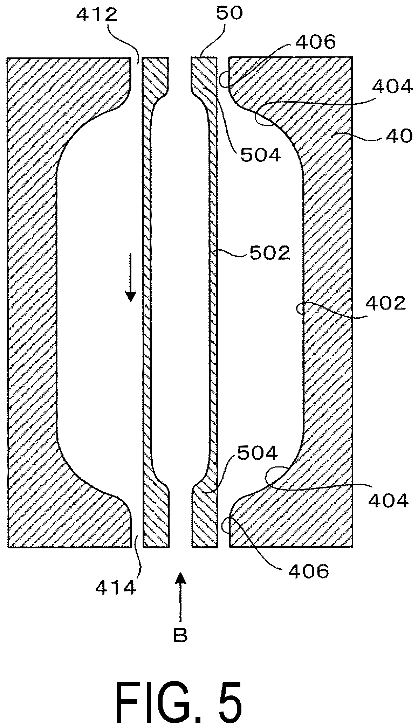

Next, a second embodiment will be described with reference to FIGS. 4 and 5.
As illustrated in FIG. 4, the second embodiment differs from the first embodiment in that portions (opening-surrounding sections) 120 of the inner liner 12 surrounding the first openings 22 are thicker than the other parts thereof, and is otherwise similar to the first embodiment. In the embodiment described hereafter, elements identical or similar to those of the first embodiment are described using identical reference numerals.

The inner liner 12 of the second embodiment is formed from a polyolefin.
"Polyolefin" is a general term for polymers synthesized from an olefin or alkene monomer.
For example, polypropylene, a typical polyolefin, is a resin composed of polymerized propylene, and is one type of thermoplastic plastic. It has an ordinary heat resistance temperature of 100 to 140°C, and, at 0.9 to 0.91, the smallest specific gravity of all types of plastic. It is a material exhibiting comparatively good heat resistance, as well as superior mechanical strength. It is produced in large amounts, second only to polyethylene, and is inexpensive.
Polyolefin has adhesion-resistant properties, but the adhesiveness thereof can be improved via an adhesive pretreatment such as Corona discharge treatment or ITRO treatment. It is a material of superior mechanical properties (tensile strength, compressive strength, and impact strength), high surface hardness, and superior wear resistance. In addition, because it has a high heat resistance temperature, a high curing temperature can be set, allowing for reduced curing time. Moreover, it is highly resistant to acidic and alkaline solutions constituting the disinfectants used to clean fuselage pipes and aircraft water tanks.

A method for manufacturing the inner liner 12 made from a polyolefin material will be described using FIG. 5.
In the present embodiment, the inner liner 12 is molded from a polyolefin material via blow molding. A mold 40 used to perform blow molding is formed so that the interior thereof conforms to the shape of the inner liner 12. Specifically, a larger-diameter section 402 corresponding to the cylindrical section 102 of the aircraft water tank 8, two curved sections 404 corresponding to the dome sections 104, and two smaller-diameter sections 406 corresponding to the mouthpieces 16 are formed within the mold 40. The mold 40 is disposed so that the axial direction of the larger-diameter section 402 is vertically oriented, with the inside of the smaller-diameter section 406 positioned above constituting an upper opening 412 and the inside of the smaller-diameter section 406 positioned below constituting a lower opening 414, and the upper opening 412 and the lower opening 414 being disposed along the direction of gravity.
To mold the inner liner 12, a parison 50 of a plasticized resin material (polyolefin) is introduced via the upper opening 412 of the mold 40, and the lower part of the parison 50 is positioned within the lower opening 414. The parison 50 is extruded from a donut-shaped head not illustrated in the drawings, and is tubular in shape. Compressed air B is then blown into the interior of the lower end of the parison 50 in the lower opening 414. The compressed air B causes the parison 50 to swell and press against the inner wall of the mold 40, thereby molding a molded resin article, i.e., an inner liner 12, conforming to the shape of the mold 40.

The thickness and shape of the molded article can be adjusted by adjusting the gap of the head to control the thickness of the parison 50 (i.e., via parison control) when introducing the parison 50 via the upper opening 412. Specifically, as illustrated in FIG. 5, the thickness of the parison 50 is controlled so that the thickness of the parison 50 in the upper and lower smaller-diameter sections 406 is greater than the thickness of the parison 50 in the larger-diameter section 402. This allows the areas near the water supply sections corresponding to the smaller-diameter sections 406, i.e., the portions (opening-surrounding sections) 120 of the inner liner 12 surrounding the first openings 22, to be imparted with a greater thickness than the other portions thereof.

A typical conventional method for molding the inner liner 12 is inflation molding. This is because ABS resin, widely used as the material of the inner liner 12 in the conventional art, has a narrow range of temperatures suitable for molding, making it difficult to blow mold.
In inflation molding, a tubular piece of a solid resin material is conveyed into a mold, and a molded article having a shape conforming to the mold is molded by applying pressure and heat thereto. In inflation molding, the dome sections 104 of the aircraft water tank 8, especially the areas near the mouthpieces 16, have a high level of curvature, causing the resin material to become thin. For this reason, it was previously impossible to impart the opening-surrounding sections 120 of the inner liner 12 with a greater thickness than the other parts thereof as illustrated in FIG. 4.

In the present embodiment, the use of a polyolefin allows the inner liner 12 to be molded comparatively easily via blow molding, and the opening-surrounding sections 120 of the inner liner 12 can be imparted with a greater thickness than the other parts thereof via parison control as appropriate.
Imparting the opening-surrounding sections 120 of the inner liner 12 with a greater thickness than the other parts thereof disperses the stress to which the inner liner 12 is subjected at the outer circumferential ends 284 of the annular wall sections 28, which is advantageous in ensuring the strength of the inner liner 12.

In addition, the use of a polyolefin for the material of the inner liner 12 in the present embodiment allows the inner liner 12 to be imparted with higher heat resistance, wear resistance, and chemical resistance than would be yielded by conventional ABS resin or the like.

### Reference Signs List

- 8:: Aircraft water tank
- 10:: Tank body
- 12:: Inner liner
- 14:: Fiber-reinforced resin layer
- 16:: Mouthpiece
- 20:: Cap
- 22:: First opening
- 24:: Second opening
- 26:: Mouthpiece body
- 28:: Annular wall section
- 32:: Mouthpiece side opening
- 102:: Cylindrical section
- 104:: Dome section

## Claims

1. An aircraft water tank (8) comprising:
a cylindrical section (102);
dome sections (104) provided on both sides of the cylindrical section (102); and
a mouthpiece (16) provided in a center of each of the dome sections (104) ;
the dome sections (104) being provided with an inner liner (12) and a fiber-reinforced resin layer (14) provided on an outer peripheral surface of the inner liner (12);
the inner liner (12) and the fiber-reinforced resin layer (14) being provided with coaxially positioned first and second openings (22, 24), respectively; each of the mouthpieces (16) being provided with a cylindrical mouthpiece body (26) that passes through the openings (22, 24), and an annular wall section (28) that extends outward in a radial direction from around the entire outer circumference of the mouthpiece body (26) between the inner liner (12) and the fiber-reinforced resin layer (14), and is attached to the inner liner (12) and the fiber-reinforced resin layer (14) around the circumferences of the openings (22, 24), wherein the annular wall section (28) has an outer surface shape on a side (2804) directly attached to the fiber-reinforced resin layer (14), the surface shape of the annular wall section (28) being formed by a uniform tension curved surface, wherein the entireties of the outer surfaces (2804) of the annular wall sections (28) are attached to those portions of the fiber-reinforced resin layer (14) surrounding the second openings (24); wherein the uniform tension curved surface is a surface by means of which stress caused by internal pressure of the aircraft water tank is uniformly distributed throughout the fiber-reinforced resin layer (14) over the dome sections (104), and
wherein the inner liner (12) is formed from a polyolefin,
**characterised in that** the inner liner (12) is thicker in portions thereof surrounding the first openings (22) than in other portions thereof.

## Patentansprüche

1. Luftfahrzeugwassertank (8), umfassend:
einen zylindrischen Abschnitt (102);
Kuppelabschnitte (104), die auf beiden Seiten des zylindrischen Abschnitts (102) bereitgestellt sind; und
ein Mundstück (16), das in einer Mitte von jedem der Kuppelabschnitte (104) bereitgestellt ist;
wobei die Kuppelabschnitte (104) mit einer Innenauskleidung (12) versehen sind und eine faserverstärkte Harzschicht (14) auf einer Außenumfangsfläche der Innenauskleidung (12) bereitgestellt ist;
wobei die Innenauskleidung (12) und die faserverstärkte Harzschicht (14) jeweils mit koaxial positionierten ersten und zweiten Öffnungen (22, 24) versehen sind;
wobei jedes der Mundstücke (16) mit einem zylindrischen Mundstückkörper (26), der durch die Öffnungen (22, 24) hindurchgeht, und einem ringförmigen Wandabschnitt (28), der sich in einer Radialrichtung von um den gesamten Außenumfang des Mundstückkörpers herum (26) zwischen der Innenauskleidung (12) und der faserverstärkten Harzschicht (14) nach außen erstreckt und an der Innenauskleidung (12) und der faserverstärkten Harzschicht (14) um die Umfänge der Öffnungen (22, 24) herum befestigt ist, versehen ist, wobei der ringförmige Wandabschnitt (28) eine Außenoberflächenform auf einer Seite (2804) direkt an der faserverstärkten Harzschicht (14) befestigt aufweist, wobei die Oberflächenform des ringförmigen Wandabschnitts (28) durch eine gleichmäßig spannungsgekrümmte Oberfläche gebildet ist, wobei die Gesamtheiten der Außenoberflächen (2804) der ringförmigen Wandabschnitte (28) an jenen Abschnitten der faserverstärkten Harzschicht (14) befestigt sind, die die zweiten Öffnungen (24) umgeben;
wobei die gleichmäßig spannungsgekrümmte Oberfläche eine Oberfläche ist, mittels derer durch Innendruck des Luftfahrzeugwassertanks verursachte Beanspruchung gleichmäßig über die faserverstärkte Harzschicht (14) hinweg über die Kuppelabschnitte (104) verteilt wird, und
wobei die Innenauskleidung (12) aus einem Polyolefin gebildet ist,
**dadurch gekennzeichnet, dass** die Innenauskleidung (12) in Abschnitten davon, die die ersten Öffnungen (22) umgeben, dicker ist als in weiteren Abschnitten davon.

## Revendications

1. Réservoir d'eau d'aéronef (8) comprenant :
une section cylindrique (102) ;
des sections de dôme (104) fournies de part et d'autre de la section cylindrique (102) ; et
un embout buccal (16) fourni dans un centre de chacune des sections de dôme (104) ;
des sections de dôme (104) étant pourvues d'un revêtement interne (12) et d'une couche de résine renforcée par des fibres (14) fournies sur une surface périphérique externe du revêtement interne (12) ;
le revêtement interne (12) et la couche de résine renforcée par des fibres (14) étant pourvus de première et deuxième ouvertures positionnées de manière coaxiale (22, 24), respectivement ;
chacun des embouts buccaux (16) étant pourvu d'un corps d'embout buccal cylindrique (26) qui traverse les ouvertures (22, 24), et d'une section de paroi annulaire (28) qui s'étend vers l'extérieur dans une direction radiale à partir du tour de la circonférence externe entière du corps d'embout buccal (26) entre le revêtement interne (12) et la couche de résine renforcée par des fibres (14), et est fixé au revêtement interne (12) et à la couche de résine renforcée par des fibres (14) autour des circonférences des ouvertures (22, 24), dans lequel la section de paroi annulaire (28) a une forme de surface externe sur un côté (2804) directement fixée à la couche de résine renforcée par des fibres (14), la forme de surface de la section de paroi annulaire (28) étant formée par une surface incurvée de tension uniforme, dans laquelle les entièretés des surfaces externes (2804) des sections de paroi annulaire (28) sont fixées à ces parties de la couche de résine renforcée par des fibres (14) entourant les deuxièmes ouvertures (24) ;
dans lequel la surface incurvée de tension uniforme est une surface au moyen de laquelle une contrainte provoquée par une pression interne du réservoir d'eau d'aéronef est distribuée uniformément dans toute la couche de résine renforcée par des fibres (14) sur les sections de dôme (104), et
dans lequel le revêtement interne (12) est formé à partir d'une polyoléfine,
**caractérisé en ce que** le revêtement interne (12) est plus épais dans des parties de celui-ci entourant les premières ouvertures (22) que dans d'autres parties de celui-ci.
